Europäisches Patentamt

European Patent Office

Office européen des brevets

(19)

(11) Veröffentlichungsnummer : **0 145 996**
**B1**

(12) **EUROPÄISCHE PATENTSCHRIFT**

(45) Veröffentlichungstag der Patentschrift :
07.09.88

(21) Anmeldenummer : 84114088.2

(22) Anmeldetag : 22.11.84

(51) Int. Cl.⁴ : **F 16 J 15/34, F 16 J 15/54**

(54) **Wellendichtung.**

(30) Priorität : 01.12.83 DE 3343490

(43) Veröffentlichungstag der Anmeldung :
26.06.85 Patentblatt 85/26

(45) Bekanntmachung des Hinweises auf die Patenterteilung : 07.09.88 Patentblatt 88/36

(84) Benannte Vertragsstaaten :
BE CH DE FR GB LI NL

(56) Entgegenhaltungen :
DD-A-    14 251
DE-C-    854 448
US-A- 2 420 039
US-A- 3 669 459

(73) Patentinhaber : Gustav Espey GmbH & Co. KG.
Vulkanstrasse 26
D-4100 Duisburg 1 (DE)

(72) Erfinder : Kemper, Wolfgang
Bonertstrasse 46
D-4100 Duisburg 46 (DE)

(74) Vertreter : Bergen, Klaus, Dipl.-Ing. et al
Patentanwälte Dr.-Ing. Reimar König Dipl.-Ing. Klaus
Bergen Wilhelm-Tell-Strasse 14 Postfach 260162
D-4000 Düsseldorf 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Dichtung für drehende Teile, wie Wellen, insbesondere von in Naßbereichen eingesetzten Maschinen, die eine drehfest, jedoch axial verschiebbar mit der Welle verbundene, mit radialem Spiel in eine Ausnehmung eines mit einer Austrittsöffnung versehenen stationären Käfigs eingesetzte Dichtscheibe aufweist.

Bekannte Dichtungen bestehen aus Gehäuse-Ringnuten bzw. Kammerringen, wobei jede Kammer mit einem mehrteiligen, von einer Schlauchfeder umspannten Dichtring bestückt wird. Die Dichtringe sind in den Kammern bzw. Nuten beweglich gelagert und gegen Verdrehen gesichert. Die von den Schlauchfedern an die Welle gedrückten Dichtringe besitzen ein sehr geringes Spiel zwischen Welle und Dichtring-Bohrung. Trotzdem lassen sich Reibungen zwischen der drehenden Welle und dem/den feststehenden Dichtring(en) nicht vermeiden bzw. sind wegen der gewünschten Abdichtung, die ein enges Anliegen erfordert, sogar unerläßlich.

Neben einem dadurch bedingten Verschleiß bedeutet das für die Anwendungsfälle, in denen ein Material mehrfach über Rollen bzw. Walzen gezogen wird, beispielsweise beim Herstellen von Textil- oder Papierbahnen, daß diese zusätzliche Reibungsfläche den zu überwindenden Widerstand beim Transportieren der Bahnen über die in den Dichtungen umlaufenden Walzen erhöht. Andererseits zwingen aber die bei derartigen Herstellungsverfahren, oder beispielsweise auch in Waschmaschinen anfallenden bzw. benötigten Flüssigkeiten zu einer sorgfältigen Abdichtung, um die Lager der Wellen, Rollen oder Walzen vor schädlichen Einflüssen weitestgehend zu schützen und somit einem schnellen Verschleiß entgegenzuwirken.

Zur Vermeidung der vorstehenden Nachteile, ist es für eine Dichtung der eingangs genannten Art durch die US-A-2 420 039 bekanntgeworden, einen T-förmigen, elastischen Dichtring in einer Ausnehmung eines Käfigs bzw. Gehäuses anzuordnen und durch radiales Andrücken mit einer die Dichtscheibe über Kreuz umschließenden federartigen Stahlmanschette drehfest, jedoch axial verschiebbar mit der Welle zu verbinden. Diese bekannte Dichtung erfordert allerdings eine Sonderkonstruktion des Dichtringes, denn dieser muß nicht nur unterteilt und aus einem elastischen Material hergestellt sein, sondern außerdem eine bestimmte, nämlich T-förmige Kontur besitzen. Damit sich die drehfeste Verbindung mit der Welle und die erforderliche Dichtwirkung erzielen lassen, sind zudem Federelemente erforderlich, die den elastischen Dichtring radial an die Welle anpressen. Die Verwendung einanstatt mehrteiliger Dichtringe ist durch die DD-A-14 251 bekanntgeworden.

Der Erfindung liegt die Aufgabe zugrunde, das Montieren und Demontieren sowie Herstellen einer insbesondere für Naßbereiche geeigneten Wellendichtung zu erleichtern, die zudem den von einer drehenden Welle zu überwindenden Reibungswiderstand erheblich reduziert.

Erfindungsgemäß wird diese Aufgabe dadurch gelöst, daß eine einteilige Dichtscheibe in einem zweiteiligen Käfig aus miteinander lösbar verbundenen Ringscheiben angeordnet ist und eine mit der Welle umlaufende, in Richtung des abzudichtenden Bereichs wirkende Druckfeder an einer Seite der Dichtscheibe abgestützt ist. Die fest auf eine Welle aufgeschobene, nur über die Vorspannung eines O-Ringes in der Innenbohrung der Dichtscheibe gehaltene einteilige Dichtscheibe dreht sich zusammen mit der Welle in der Ausnehmung des stationären Käfigs, wobei die Dichtscheibe zu den sie umgebenden Käfigflächen ein sehr geringes axiales Spiel besitzt. Damit die Dichtung nicht als Bremsscheibe wirkt, wird das Spiel möglichst klein gehalten. Die Seitenflächen der Dichtscheibe berühren folglich die Gegenflächen des Käfigs nur leicht. Die Reibungsverluste sind daher sehr gering, und da zwischen dem Bohrungsumfang der Dichtscheibe und dem Umfang der Welle keinerlei Reibung mehr auftritt, liegt eine fast völlig reibungsfreie Abdichtung vor. Sich im Käfig ansammelnde Flüssigkeit strömt an der dem Naßbereich zugewandten Dichtungsseite und über den radialen Freiraum der Ausnehmung bis zum untersten Teil des Käfigs, wo sie über eine Austrittsöffnung bzw. über einen oder mehrere Kanäle nach außen abfließt. Das gezielte Abströmen nach außen wird unterstützt, wenn die Austrittsöffnung zur Medium-/Flüssigkeitsseite größer ist als die zur Lagerseite hin.

Der zweiteilige Käfig aus den miteinander lösbar verbundenen Ringscheiben erleichtert das Montieren und Demontieren der Dichtung. Die Ausnehmung läßt sich einfach durch eine zylindrische Ausdrehung in einem der beiden Ringscheiben herstellen; im montierten Zustand schließt die gegenüberliegende Ringscheibe — bis auf eine ausreichende Bohrung für die durchgehende Welle — mit ihrer planen Oberfläche die Ausnehmung ab.

Die mit der Welle umlaufende und an einer Seite der Dichtscheibe abgestützte Druckfeder trägt dazu bei, einen leichten seitlichen Andruck der Dichtscheibe an die Gegenfläche der Ringscheibe zu bewirken. Die Dichtwirkung läßt sich hierdurch erhöhen, wobei die Druckfeder immer gegen die dem zu schützenden Lager abgewandte Seite der Dichtscheibe drückt. Die Federkraft übersteigt dabei geringfügig die Haftreibung des O-Ringes in der Innenbohrung der Dichtscheibe. Bei Längenausdehnungen der Welle oder Veränderungen des Maschinengehäuses läßt sich durch das axiale Verschieben der Dichtscheibe ein Ausgleich erreichen.

Wie an sich bekannt, läßt sich die Dichtwirkung durch mehrere hintereinandergeschaltete Käfige mit jeweils einer Dichtscheibe und ggf. einer Fett- und/oder Gassperre zwischen einzelnen Käfigen weiter verbessern.

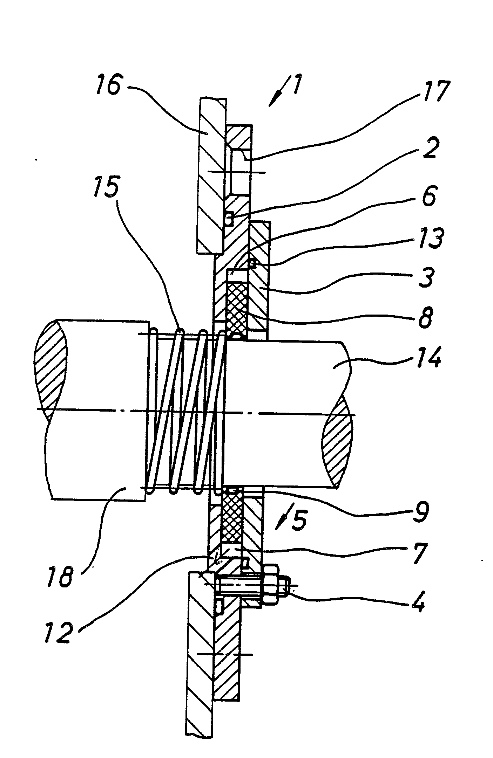

Die Erfindung wird nachfolgend anhand eines in der Zeichnung dargestellten Ausführungsbeispiels näher erläutert. Die im Schnitt dargestellte Dichtung 1 setzt sich aus zwei Ringscheiben 2, 3 zusammen, die sich mittels Schrauben 4 zu einem Käfig 5 zusammenfügen lassen, der im Inneren eine ringförmige Ausnehmung 6 mit einem radialen Freiraum 7 für eine darin eingesetzte Dichtscheibe 8 aus beispielsweise Kunststoff bildet. In einer Ringnut der Innenbohrung der ungeteilten Dichtscheibe 8 befindet sich ein Rundschnurring bzw. O-Ring 9.

Eine oder mehrere im unteren Teil des Käfigs 5 angeordnete Austrittsöffnungen 12 stellen eine Verbindung des radialen Freiraums 7 nach außen her. Die Austrittsöffnung 12 befindet sich in der dem nicht dagestellten Lager abgewandten Ringscheibe 2 des Käfigs 5. Die in die Ringscheibe 2 eingearbeitete Ausnehmung 6 schließt die in der Zeichnung rechte Ringscheibe 3 ab. Diese weist oberhalb der Ausnehmung 6 einen den radialen Freiraum 7 umlaufend abdichtenden, zwischen beiden Ringscheiben 2 und 3 liegenden Rundschnurring 13 auf, der ein unerwünschtes Abfließen des in die Ausnehmung 6 gelangenden Wassers in Richtung des zu schützenden Lagers bzw. anderer Maschinenteile verhindert. Dazu trägt auch eine mit einer Welle 14 umlaufende Druckfeder 15 bei, die einen leichten seitlichen Andruck der Dichtscheibe 8 an die Gegenfläche des Ringes 3 bewirkt. Die Druckfeder 15 kann sich dabei an einem Wellenbund 18 abstützen.

Der zusammengeschraubte Käfig 5 läßt sich an eine Gehäusewand 16 anflanschen, wozu die Ringscheibe 2 umfangsverteilt angeordnete Bohrungen 17 zum Anbringen mittels Schrauben besitzt.

Der aus den Ringscheiben 2 und 3 zusammengesetzte Käfig 5 ist so dimensioniert, daß darin die Dichtscheibe 8 mit der Welle 14 weitestgehend berührungsfrei umlaufen kann. Bei einer solchen auf die Welle 14 aufgeschobenen Baueinheit wirkt die Dichtscheibe 8 wie ein Spritzring und verhindert, daß Flüssigkeit an das nicht dargestellte Lager gelangt. Die Flüssigkeit sammelt sich vielmehr im radialen Freiraum 7 und tritt über die Öffnungen 12 gezielt nach außen aus.

**Patentansprüche**

1. Dichtung (1) für drehende Teile, wie Wellen, insbesondere von in Naßbereichen eingesetzten Maschinen, die eine drehfest, jedoch axial verschiebbar mit der Welle (14) verbundene, mit radialem Spiel in einer Ausnehmung (6) eines mit einer Austrittsöffnung (12) versehenen stationären Käfigs (5) eingesetzte Dichtscheibe (8) aufweist, dadurch gekennzeichnet, daß eine einteilige Dichtscheibe (8) in einem zweiteiligen Käfig (5) aus miteinander lösbar verbundenen Ringscheiben (2, 3) angeordnet ist und eine mit der Welle (14) umlaufende, in Richtung des abzudichtenden Bereichs wirkende Druckfeder (15) an einer Seite der Dichtscheibe (8) abgestützt ist.

2. Dichtung nach Anspruch 1, gekennzeichnet durch eine dem abzudichtenden Bereich abgewandte Austrittsöffnung (12).

3. Dichtung nach Anspruch 1 oder 2, gekennzeichnet durch eine sich zur Mediumsseite vergrößernde Austrittsöffnung (12).

4. Dichtung nach einem oder mehreren der Ansprüche 1 bis 3, gekennzeichnet durch mehrere hintereinandergeschaltete Käfige (5) mit jeweils einer Dichtscheibe (8).

5. Dichtung nach Anspruch 4, gekennzeichnet durch Fett- und/oder Gassperren zwischen einzelnen Käfigen (5).

**Claims**

1. A seal (1) for rotating parts such as shafts, in particular of machines operating in wet areas, having a sealing washer (8) that is connected to the shaft in a rotationally fixed but axially displaceable manner inserted with radial clearance in a recess (6) in a stationary cage (5) having an outlet opening (12), characterised in that a one-part sealing washer (8) is arranged in a two-part cage (5) made up of separably connected annular discs (2, 3) and a compression spring (15) that rotates with the shaft (14) and acts towards the area to be sealed off is supported on one side of the sealing washer (8).

2. A seal according to claim 1, characterised by an outlet opening (12) facing away from the area to be sealed.

3. A seal according to claim 1 or claim 2, characterised by an outlet opening (12) which becomes larger towards the medium side.

4. A seal according to any one or more of claims 1 to 3, characterised by a plurality of cages (5) arranged one behind another, each with a sealing washer (8).

5. A seal according to claim 4, characterised by grease and/or gas barriers between individual cages (5).

**Revendications**

1. Joint (1) pour pièces rotatives, arbres par exemple, notamment pour machines utilisées dans des zones contenant du liquide, qui comporte une rondelle de joint (8), reliée à l'arbre (14) sans possibilité de rotation relative, mais de manière à pouvoir se déplacer dans le sens axial, et engagée, avec du jeu dans le sens radial, dans un évidement (6) ménagé dans une cage fixe (5) munie d'un orifice de sortie (12), caractérisé en ce qu'une rondelle de joint (8) en une seule pièce est montée dans une cage (5) en deux pièces constituées par des disques annulaires (2, 3) qui sont assemblés de manière à être amovibles et en ce qu'un ressort de compression (15) qui tourne avec l'arbre (14) et agit dans la direction de la zone à rendre étanche prend appui sur un côté de la rondelle de joint (8).

2. Joint selon la revendication 1, caractérisé en ce que l'orifice de sortie (12) est du côté opposé à la zone à rendre étanche.

3. Joint selon l'une des revendications 1 ou 2, caractérisé en ce que l'orifice de sortie (12) s'agrandit dans la direction du milieu liquide.

4. Joint selon l'une ou plusieurs des revendications 1 à 3, caractérisé par plusieurs cages (5) montées à la suite les unes des autres avec chaque fois une rondelle de joint (8).

5. Joint selon la revendication 4, caractérisé par des barrières des graisses et/ou de gaz dans les différentes cages (5).